(19)

**Europäisches Patentamt**
**European Patent Office**
**Office européen des brevets**

(11) **EP 4 741 468 A1**

(12) **EUROPEAN PATENT APPLICATION**

(43) Date of publication:
**13.05.2026 Bulletin 2026/20**

(21) Application number: **24306870.7**

(22) Date of filing: **07.11.2024**

(51) International Patent Classification (IPC):
**C09J 197/02** (2006.01)     **C08K 5/053** (2006.01)
**C08K 5/092** (2006.01)

(52) Cooperative Patent Classification (CPC):
(C-Sets available)
**B27N 3/002; B27N 1/003; B27N 3/02; B27N 3/04;**
**C08H 1/00; C08K 5/053; C08K 5/092;**
**C09J 189/00; C09J 197/02;** B27N 1/0209     (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: EVERTREE
**60280 Venette (FR)**

(72) Inventors:
• MANGEON PASTORI, Carine
**SAINT MAUR DES FOSSES (FR)**
• PELLETIER, Henri
**COYE-LA-FORÊT (FR)**

(74) Representative: **Santarelli**
**Tour Trinity**
**1 bis Place de la Défense**
**92400 Courbevoie (FR)**

(54) **COMPOSITION AND PROCESS TO PREPARE A LIGNOCELLULOSIC-BASED ARTICLE**

(57)     The present invention relates to a process for preparing a lignocellulosic-based article comprising resinating lignocellulosic material with an adhesive composition comprising a protein, an organic polycarboxylic acid compound, a non-aromatic polyol and water.

(52)  Cooperative Patent Classification (CPC): (Cont.)

C-Sets
**C08K 5/053, C08K 5/092, C08L 89/00;**
**C08K 5/053, C08K 5/092, C08L 97/02;**
**C08K 5/092, C08K 5/053, C08L 89/00;**
**C08K 5/092, C08K 5/053, C08L 97/02**

**Description**

**Field of the Invention**

The present invention relates to an adhesive composition, its uses for preparing a lignocellulosic-based article and to a lignocellulose-based article obtained thereof. The adhesive composition comprises at least three different components which are a protein, an organic polycarboxylic acid compound and a non-aromatic polyol. More specifically, the present invention relates to a process for preparing a multi-layer lignocellulosic article comprising a core (inner) and two surface (outer) layers using this adhesive composition.

**Background of the Invention**

Lignocellulosic-based composites comprise a plurality of lignocellulosic materials (e.g., wood, straw) bound together with an adhesive (or resin).

Traditionally, these lignocellulosic-based composites are manufactured using an urea formaldehyde (UF) resin, a melamine urea formaldehyde (MUF) resin, a phenol formaldehyde (PF) resin, or a polymeric methylenediphenyl diisocyanate (pMDI) resin; all made from petroleum feedstock.

Processes and industrial equipment that can be used to manufacture lignocellulosic-based composites, such as plywood, oriented strand board, particleboard, chipboard fiberboard, are described for example in: Wood-Based Panels - An Introduction for Specialists, COST Office, 2010, Edited by H. Thoemen, M. trie and M. Sernek, Published by Brunel University Press, London, UB8 3PH. England, ISBN 978-1-902316-82-6.

In particular, multi-layer lignocellulosic-based articles, such as wood-based composites, include at least one lignocellulosic core (or intermediate) layer sandwiched between two lignocellulosic surface (or face) layers which are at least one upper lignocellulosic surface layer and at least one lower lignocellulosic surface layer. The density and the structure of the lignocellulosic layers can be identical or different. The lignocellulosic layers can respectively be made of identical or different lignocellulosic materials such as straw, paper, cardboard, wood. The orientation of the lignocellulosic materials forming the layers can respectively be identical or different, for example oriented longitudinally or transversely. Also, the size of the lignocellulosic materials forming the layers can respectively be identical or different. The wood particles used in the surface layers have generally a smaller average particle size than wood particles used in the core layer. For example, wood particleboards are manufactured with three different layers; one core layer with large wood particles (average particles width approximately between 1 to 5 mm) representing around 50 to 80% of the panel, and two surface layers, located on each side of the core layer, with smaller wood particles (average particles width approximately below 1 mm) representing 20 to 50% of the panel. Wood particles have an average aspect ratio (length:width) of greater than 1:1.

Recent environmental and health concerns highlight the need for more eco-friendly adhesive compositions and for lignocellulosic-based composites with low emissions of volatile organic compounds (VOC).

Patent application FR3001461 A1 discloses an adhesive composition having low emissions of volatile organic compounds, useful for preparing a cellulose-based particleboard. This adhesive composition comprises a protein and an oligoester obtainable by esterification of glycerol and citric acid. According to patent application FR3001461 A1, an oligoester is an oligomer with a degree of polymerization (DP) comprised between 1 and 20 and whose units are linked by ester functions. During esterification, the citric acid/glycerol molar ratio is of 1/1 to 10/1. Esterification takes place without the protein. The esterification temperature is comprised between 100°C and 200°C. In the adhesive composition, the proportion by weight relative to the weight of the adhesive of (i) the oligoester is from 60% to 99%, (ii) the protein is from 1% to 20% and (iii) the water is from 1% to 20%. The adhesive composition can further comprise unreacted citric acid and glycerol, but in small quantities. Typically the unreacted glycerol represents less than 5% and in particular less than 2% by weight relative to the weight of the adhesive. Indeed, according to this document one seeks to minimize the presence of glycerol which can have a negative impact during the subsequent preparation of the particle board, because it would promote delamination of the particle board. This adhesive composition does not contain petroleum feedstock; however its method of preparation requires heating the mixture at high temperature, optionally with vacuum, to obtain the oligoester, therefore increasing the production time and costs. Patent application FR3001461 A1 also discloses a process for preparing mono- or multi-layer lignocellulosic-based particleboards using this adhesive composition.

Umemura et al. 2013 and 2015 (respectively "Investigation of a new natural adhesive composed of citric acid and sucrose for particleboard". J Wood Sci 59, 203-208 and "Investigation of a new natural adhesive composed of citric acid and sucrose for particleboard II: effects of board density and pressing temperature". J Wood Sci 61, 40-44) studied the use of an aqueous adhesive comprising citric acid and sucrose for manufacturing particleboards. This aqueous adhesive does not contain any protein. The authors found that the particleboard bonded using the citric acid and sucrose in the ratio of 25/75 yielded excellent physical properties and that the optimum board density and press temperature were 0.8 g/cm$^3$ and 200°C, respectively.

Li et al., 2010 ("Soy flour adhesive modified with urea, citric acid and boric acid", Pigment & Resin Technology, Vol. 39 No. 4, pp. 223-227) discloses an adhesive for producing wood-based composites using an eco-friendly adhesive prepared by treating defatted soy flour with urea at 30°C for 2 hours, and then adding citric acid and boric acid for a reaction time of 0.5h at 30°C. This adhesive exhibits high viscosity (10,000 cP) which is not optimal for spraying but could be used for extrusion application.

Patent application EP 2 236 578 A1 discloses a wood adhesive composition comprising i) 100 weight parts of water; ii) from 3 to 45 weight parts of animal, plant or fungus proteinaceous material having more than 5% by weight (w/w) of protein (e.g., soybean meal, pea protein or defatted rapeseed meal); iii) from 0.01 to 15 weight parts of an acidity regulator which is an organic acid, an organic acid salt and/or an organic acid anhydride (e.g., citric acid); iv) from 0.01 to 15 weight parts of an aromatic compound (e.g., tannin or an aromatic compound); v) from 0.01 to 15 weight parts of a curing agent; vi) from 0.01 to 15 weight parts of a preservative; vii) from 0 to 10 weight part of a filler (e.g.., sawdust or wood fiber); and viii) optionally from 0 to 15 weight part of a drier (e.g., an industrial alcohol or glycerin). This adhesive composition always contains an aromatic compound and it also contains petroleum feedstock.

It appears from the foregoing there is a need for improving the processability of eco-friendly adhesive compositions as well as for adhesive compositions having a high solid content and a low viscosity, without compromising the final properties of the manufactured lignocellulosic-based article.

**Invention Summary**

The inventors have found that lignocellulosic-based articles manufactured by

i) resinating lignocellulosic material with an adhesive composition comprising at least three different components which are a protein, an organic polycarboxylic acid compound and a non-aromatic polyol,

wherein if said organic polycarboxylic acid compound comprises only two carboxyl functional groups then said non-aromatic polyol comprises at least three hydroxy functional groups and if said non-aromatic polyol comprises only two hydroxyl functional groups then said organic polycarboxylic acid compound comprises at least three carboxyl functional groups,
wherein said adhesive composition is substantially free from an oligoester obtainable by esterification of glycerol and citric acid, more generally substantially free from any oligoester obtainable by an esterification reaction of the organic polycarboxylic acid compound and the non-aromatic polyol, and even more generally substantially free from any oligoester obtainable by an esterification reaction of an organic polycarboxylic acid compound and a polyol, and
wherein, if the adhesive composition comprises one or more additional components, then the latter is/are non-aromatic components, and

ii) curing the lignocellulosic material impregnated with this adhesive composition,

had better mechanical properties than those manufactured using an adhesive composition comprising respectively a protein, or an organic polycarboxylic acid compound, or a non-aromatic polyol, or a protein and an organic polycarboxylic acid compound, or a protein and a non-aromatic polyol, or an organic polycarboxylic acid compound and a non-aromatic polyol. Further, such mechanical properties were obtained at press factors applicable at the industrial scale, in particular, less than 50 s/mm, more particularly less than 30 s/mm.

Therefore the present invention relates to an adhesive composition comprising at least three different components which are a protein, an organic polycarboxylic acid compound and a non-aromatic polyol and optionally water;

provided that if said organic polycarboxylic acid compound comprises only two carboxyl functional groups then said non-aromatic polyol comprises at least three hydroxy functional groups and if said non-aromatic polyol comprises only two hydroxyl functional groups then said organic polycarboxylic acid compound comprises at least three carboxyl functional groups,
provided that said adhesive composition is substantially free from an oligoester obtainable by esterification of glycerol and citric acid, more generally substantially free from any oligoester obtainable by an esterification reaction of the organic polycarboxylic acid compound and the non-aromatic polyol, and even more generally substantially free from any oligoester obtainable by an esterification reaction of an organic polycarboxylic acid compound and a polyol, and
provided that if the adhesive composition comprises one or more additional components, then the latter is/are non-aromatic components.

Thanks to the condition that if said organic polycarboxylic acid compound comprises only two carboxyl functional groups then said non-aromatic polyol comprises at least three hydroxy functional groups and if said non-aromatic polyol comprises only two hydroxyl functional groups then said organic polycarboxylic acid compound comprises at least three carboxyl functional groups, reticulation takes place during the curing of the adhesive composition according to the present invention.

The adhesive composition comprising a protein, an organic polycarboxylic acid compound, a non-aromatic polyol and optionally water according to the invention is substantially free from an oligoester obtainable by esterification of glycerol and citric acid, and more generally substantially free from an oligoester obtainable by esterification of any organic polycarboxylic acid compound and any polyol, before curing said adhesive composition.

In other words, the adhesive composition comprising a protein, an organic polycarboxylic acid compound, a non-aromatic polyol and optionally water does not contain any oligoester obtainable by esterification of glycerol and citric acid, more generally any oligoester obtainable by esterification of the organic polycarboxylic acid compound and the non-aromatic polyol, and even more generally any oligoester obtainable by an esterification reaction of an organic polycarboxylic acid compound and a polyol, before curing said adhesive composition.

Alternatively, the adhesive composition according to the invention comprises at least, or consists of, three different components which are a protein, an organic polycarboxylic acid compound and a non-aromatic polyol and optionally water;

 wherein the non-aromatic polyol represents more than 5% in weight percent over the total dry matter weight of the adhesive composition (value 5% not included),
 provided that if said organic polycarboxylic acid compound comprises only two carboxyl functional groups then said non-aromatic polyol comprises at least three hydroxy functional groups and if said non-aromatic polyol comprises only two hydroxyl functional groups then said organic polycarboxylic acid compound comprises at least three carboxyl functional groups, and
 provided that if the adhesive composition comprises one or more additional components, then the latter is/are non-aromatic components.

Since, if the adhesive composition comprises one or more additional components, then the latter is/are non-aromatic components, the adhesive composition according to the invention is substantially free from tannins or tannin extract. In other words, the adhesive composition comprising a protein, an organic polycarboxylic acid compound, a non-aromatic polyol and optionally water does not contain any tannin or tannin extract.

In particular, the adhesive composition according to the invention is substantially free from an aromatic compound.

"Substantially free" means that the oligoester or aromatic compound may be present in trace form *i.e.* in an amount of less than 1%, optionally less than 0.5% and, in particular, less than 0.1%, and even less than 0.01 %in weight percent over the total dry matter weight of the adhesive composition.

In a particular embodiment of the invention, the adhesive composition may consist of three different components which are a protein, an organic polycarboxylic acid compound and a non-aromatic polyol, provided that if said organic polycarboxylic acid compound comprises only two carboxyl functional groups then said non-aromatic polyol comprises at least three hydroxy functional groups and if said non-aromatic polyol comprises only two hydroxyl functional groups then said organic polycarboxylic acid compound comprises at least three carboxyl functional groups.

In another embodiment of the invention, the adhesive composition may consist of water and three different components which are a protein, an organic polycarboxylic acid compound and a non-aromatic polyol, provided that if said organic polycarboxylic acid compound comprises only two carboxyl functional groups then said non-aromatic polyol comprises at least three hydroxy functional groups and if said non-aromatic polyol comprises only two hydroxyl functional groups then said organic polycarboxylic acid compound comprises at least three carboxyl functional groups.

The invention also relates to a process for preparing a lignocellulosic-based article comprising the steps of:

 a. providing lignocellulosic material and an adhesive composition of the invention as above defined; in particular, said adhesive composition comprising at least three different components which are a protein, an organic polycarboxylic acid compound and a non-aromatic polyol and optionally water;

 provided that if said organic polycarboxylic acid compound comprises only two carboxyl functional groups then said non-aromatic polyol comprises at least three hydroxyl functional groups and if said non-aromatic polyol comprises only two hydroxyl functional groups then said organic polycarboxylic acid compound comprises at least three carboxyl functional groups,
 provided that said adhesive composition is substantially free from an oligoester obtainable by esterification of glycerol and citric acid, more generally substantially free from any oligoester obtainable by an esterification reaction of the organic polycarboxylic acid compound and the non-aromatic polyol, and even more generally substantially free from any oligoester obtainable by an esterification reaction of an organic polycarboxylic acid compound and a polyol, and

provided that if the adhesive composition comprises one or more additional components, then the latter is/are non-aromatic components,

b. resinating the lignocellulosic material with the adhesive composition of the invention to provide a lignocellulosic material impregnated with said adhesive composition,

c. curing and optionally pressing the lignocellulosic material impregnated with the adhesive composition, thereby forming the lignocellulosic-based article.

The adhesive composition of the invention can be a one-part adhesive composition (*i.e.,* a single mixture that, without the addition of other components, functions as an adhesive) or a two- or multi-part adhesive composition (i.e., compositions created by mixing together two or more parts, which when mixed together function as an adhesive).

In the process according to the invention, the adhesive composition is not subjected to any conditions permitting esterification between the organic polycarboxylic acid compound such as, for example, citric acid and the non-aromatic polyol such as, for example, sucrose it contains prior to and during step a., between step a. and b., and during step b..

When the adhesive composition of the invention is a two- or multi-part composition, the parts implemented can be solid parts or liquid parts or can comprise at least one liquid part and at least one solid part. Advantageously when the adhesive composition of the invention is a two- or multi-part composition, the parts implemented can be solid parts or liquid parts or can comprise at least one liquid part and at least one solid part.

By "liquid part", it is intended a phase which is liquid under normal temperature and pressure (i.e., 20°C and 1 atm). The liquid part can be a liquid-liquid solution wherein the liquids are miscible in water, at 20°C and 1 atm. The liquid part can also be a solid-liquid solution wherein the solids have a solubility in water of at least 95%, preferably at least 98%, more preferably 100%, at 20°C and 1 atm. In particular, the liquid part is not an emulsion. Advantageously, the viscosity at 20°C of the liquid part(s) of the two- or multi-part adhesive composition of the invention is less than 1000 mPa.s, preferably, less than 500 mPa.s, more preferably, less than 400 mPa.s and, even more preferably, less than 300 mPa.s. Liquid parts of the two- or multi-part adhesive composition of the invention having such an advantageous viscosity allows them to be sprayable, in particular at the industrial scale.

The liquid part(s) of the adhesive composition of the invention can be added to the lignocellulosic material by injection or spraying, preferably by spraying.

By "solid part", it is intended a phase which is solid under normal temperature and pressure (i.e., 20°C and 1 atm). Advantageously, at 20°C and 1 atm, the solid part has a water content of less than 15%, preferably less than 10% and more preferably less than 8% by weight based on the total weight of the solid part.

The solid part(s) of adhesive composition of the invention can be added to the lignocellulosic material through a hopper.

When a two- or multi-part adhesive composition is used in the process of the invention, then the parts of the adhesive composition are added to the lignocellulosic material either separately or simultaneously.

In an advantageous embodiment of the invention, the adhesive composition of the invention is a two-part adhesive composition having a liquid part comprising the organic polycarboxylic acid compound, the non-aromatic polyol and water; and a solid part comprising the protein. When such a two-part adhesive composition is used in the process of the invention, then the process of the invention can comprise i) adding either the liquid part or the solid part to the lignocellulosic material to provide a mixture, then ii) adding the remaining liquid or solid part to the mixture to provide a lignocellulosic material impregnated with the adhesive composition. According to this embodiment, the process of the invention can also comprise adding simultaneously the liquid part and the solid part to the lignocellulosic material a lignocellulosic material impregnated with the adhesive composition.

In another embodiment of the invention, the adhesive composition of the invention is a three-part adhesive composition of the invention having a first liquid part comprising the organic polycarboxylic acid compound and water, a second liquid part comprising the non-aromatic polyol and water, and a solid part comprising the protein. When such a three-part adhesive composition is used in the process of the invention, then the process of the invention can comprise i) adding either the two liquid parts (separately or simultaneously) or the solid part to the lignocellulosic material to provide a mixture, then ii) adding the remaining two liquid parts (separately or simultaneously) or solid part to the mixture obtained in said step i) to provide a lignocellulosic material impregnated with the adhesive composition.

By "organic polycarboxylic acid compound", it is meant, in the present invention, an organic compound comprising at least two, preferably at least three, carboxyl functional groups.

Advantageously, the organic polycarboxylic acid compound implemented in the invention is soluble in tap water at room temperature, in particular at a pH comprised between 0.1 and 13. Advantageously, the organic polycarboxylic acid compound implemented in the invention is soluble in the adhesive composition at room temperature. Advantageously also, the organic polycarboxylic acid compound implemented in the invention comprises at least three carboxyl functional groups.

Organic polycarboxylic acid compounds comprising only two carboxyl functional groups include succinic acid, tartaric acid, malic acid, oxalic acid, malonic acid, maleic acid, fumaric acid, adipic acid, glutaric acid, suberic acid, isophthalic acid, terephthalic acid and itaconic acid.

Organic polycarboxylic acid compounds comprising at least three carboxyl functional groups include citric acid, aconitic acid, isocitric acid, oxalosuccinic acid, tricarballylic acid and trimesic acid.

Preferably, the organic polycarboxylic acid compound implemented in the invention is selected from the group consisting of succinic acid, tartaric acid, malic acid, oxalic acid, malonic acid, maleic acid, fumaric acid, adipic acid, glutaric acid, suberic acid, isophthalic acid, terephthalic acid, itaconic acid, citric acid, aconitic acid, isocitric acid, oxalosuccinic acid, tricarballylic acid, trimesic acid and a combination thereof, more preferably selected from the group consisting of tartaric acid, malic acid, glutaric acid, citric acid and a combination thereof. Most preferably the organic polycarboxylic acid compound implemented in the invention is an organic polycarboxylic acid compound comprising at least three carboxyl functional groups, even more preferably citric acid.

By "polyol" it is meant, in the present invention, an organic compound comprising at least two, preferably at least three, hydroxyl functional groups. Accordingly boric acid $(B(OH)_3)$ is not a polyol.

By "non-aromatic polyol" and more generally "non-aromatic compound" it is meant, in the present invention, a polyol as above defined or a compound, the chemical structure of which does not include any aromatic group and, in particular, any benzene group.

In a preferred embodiment the non-aromatic polyol implemented in the invention is a sugar alcohol.

Advantageously, the non-aromatic polyol implemented in the invention is soluble in tap water at room temperature, in particular at a pH comprised between 0.1 and 13. Advantageously, the non-aromatic polyol implemented in the invention is soluble in the adhesive composition at room temperature. Advantageously also, the non-aromatic polyol implemented in the invention comprises at least three hydroxyl functional groups.

Non-aromatic polyols comprising only two hydroxyl functional groups include ethylene glycol, diethylene glycol, triethylene glycol, tetraethylene glycol, glycerol monolaurate and propylene glycol.

Non-aromatic polyols comprising at least three hydroxyl functional groups include glycerol, erythritol, threitol, arabitol, xylitol, ribitol, mannitol, sorbitol, galactitol, fucitol, iditol, sucrose, inositol, volemitol, sucrose, isomalt, maltitol, lactitol, maltotriitol, maltotetraitol, fructose and glucose.

Preferably, the non-aromatic polyol implemented in the invention is selected from the group consisting of ethylene glycol, diethylene glycol, triethylene glycol, tetraethylene glycol, glycerol monolaurate, propylene glycol, glycerol, polyglycerol, erythritol, threitol, arabitol, xylitol, ribitol, mannitol, sorbitol, galactitol, fucitol, iditol, inositol, volemitol, sucrose, isomalt, maltitol, lactitol, maltotriitol, maltotetraitol, fructose, glucose and a combination thereof.

More preferably, the non-aromatic polyol implemented in the invention is selected from the group consisting of diethylene glycol, triethylene glycol, propylene glycol, glycerol, polyglycerol, sucrose and a combination thereof.

Alternatively, the non-aromatic polyol implemented in the invention is selected from the group consisting of sucrose, glycerol, sorbitol, fructose, glucose and a combination thereof.

Even most preferably, the non-aromatic polyol implemented in the invention is sucrose.

The organic polycarboxylic acid compound and the non-aromatic polyol implemented in the invention are not proteins.

By "protein" it is meant, in the present invention, a protein composition comprising between 10% to 100% by weight of crude proteins based on dry matter, especially from plant or animal origin, preferably from plant origin, more preferably from a plant seed. It can be in the form of a ground plant seed (preferably an oleaginous or proteinaceous seed) which can be a whole of dehulled plant seed, a plant seed meal or flour, a plant protein concentrate or a plant protein isolate.

The crude protein content can be measured following the Kjeldahl procedure (NF EN ISO 5983-2: 2009) with a nitrogen-to-protein conversion factor of 6.25.

Advantageously the plant protein can be a whole plant seed (e.g., pea seed) or a fraction thereof.

"Fraction of whole plant seed" means, in the present invention, a plant seed meal or flour, a plant protein concentrate or a plant protein isolate.

Advantageously, the plant (in particular the plant seed) belongs to one or several of the following families, genus or species: Arecaceae; Asteraceae such as *Helianthus,* in particular *Helianthus annuus,* (*i.e,* sunflower); Brassicaceae such as *Brassica* (in particular *Brassica napus* (*i.e.,* oilseed rape or canola), *Brassica carinata* and *Camelina;* Cannabaceae such as *Cannabis;* Euphorbiaceae such as *Jatropha, Ricinus* (*e.g.,* castor bean); Fabaceae such as *Glycine,* in particular *Glycine max* (*i.e.,* soy), *Lupinus, Lathyrus,* and *Pisum* (*i.e.,* pea); Linaceae such as *Linum* (*i.e.,* flax); Malvaceae such as *Gossypium* (*e.g.,* cotton); and Poaceae such as *Avena, Eleusine, Hordeum, Oryza, Panicum, Sorghum, Triticum* (*e.g.,* wheat) and Zea (*e.g.,* corn). A preferred plant seed is a seed of plant belonging to the families Asteraceae, Brassicaceae or Fabaceae, more preferably Asteraceae. Another preferred plant seed is a seed of plant belonging to the genus *Helianthus, Brassica* or *Glycine,* more preferably *Helianthus.* Another preferred plant seed is a seed of plant belonging to the species *Helianthus annuus, Brassica napus, Brassica juncea, Brassica nigra, Brassica rapa, Brassica*

*carinata, Glycine max,* more preferably *Helianthus annuus.*

By "plant meal" or "plant seed meal" it is intended, in the present invention, a powder (or flour) obtained from a plant seed which has been submitted to a fat (oil) extraction step and which has been at least partially defatted. The plant meal can be a plant (seed) press-cake, a solvent extracted plant (seed) meal or a plant (seed) press-cake which has further been submitted to a solvent extraction. The solvent used to prepare the solvent extracted plant meal can be organic and/or aqueous, such as hexane, alcohol or aqueous alcohol, preferably hexane.

The plant meal can be a heat-treated plant meal, a plant meal treated with an acid. By "heat-treated plant meal", it is meant that the plant meal has been submitted to a heat treatment at a temperature of at least 130°C.

The plant meal comprises between 10% and 65% by weight of crude proteins, preferably, between 20% and 60%, more preferably, between 30% and 55%, based on dry matter.

The plant seed or plant meal can be a ground plant seed or plant meal. The term ground plant seed or plant meal refers to a micronized plant seed or plant meal.

Advantageously, the ground plant seed or plant meal has a granulometry Dv50 of less than 300 $\mu$m. In a particular embodiment, the ground plant seed or plant meal has a granulometry Dv50 between 1 $\mu$m and 300 $\mu$m, preferably, between 10 $\mu$m and 275 $\mu$m and, more preferably, between 20 $\mu$m and 250 $\mu$m, most preferably between 20 $\mu$m and 140 $\mu$m.

Advantageously, the ground plant seed or plant meal further has a granulometry Dv90 of less than 800 $\mu$m, preferably less than 400 $\mu$m, more preferably comprised between 50 $\mu$m and 150 $\mu$m.

The granulometry Dv50 and Dv90 are well known by the skilled person as the maximum size of 50% and 90% respectively of the smallest particles in weight, and can be measured with a granulometer.

By "protein concentrate", it is meant, in the present invention, a protein composition comprising at least 60 wt% and less than 80 wt% proteins based on dry matter. Preferably, the protein concentrate derives from a plant meal and is for example cotton, pea, rapeseed (or canola seed), soy, sunflower or wheat protein concentrate.

By "protein isolate", it is meant, in the present invention, a plant meal extract comprising at least 80 wt% proteins based on dry matter. Preferably, the protein isolate derives from a plant meal and is for example cotton, pea, rapeseed (or canola seed), soy, sunflower or wheat protein isolate.

The protein can be from animal origin, such as casein, milk protein, blood protein, egg protein (*e.g.*, ovalbumin), feather protein meal, gelatin (*e.g.* pork gelatin), collagen (*e.g.*, pork collagen) or bone meal.

Advantageously proteins implemented in the invention are selected from the group consisting of pea protein isolate, ground yellow pea seeds (in particular ground whole yellow pea seeds), ground sunflower meal (in particular ground solvent-extracted sunflower meal), ground rapeseed meal (in particular ground solvent-extracted rapeseed meal), ground soy meal (in particular ground solvent extracted soy meal), ground cottonseed meal (in particular ground solvent-extracted cottonseed meal), ground field beans, ground lupine seeds, ground lentil seeds, ground fenugreek seeds, ground faba beans and a combination thereof, preferably the protein implemented in the invention is ground yellow pea seeds and/or ground soy meal, most preferably is ground yellow pea seeds.

The adhesive composition according to the invention can further comprise at least one additive. It should be noted that this or these additive(s) do(es) not contribute to the adhesive properties of the adhesive composition according to the invention. Accordingly, the present invention concerns a composition comprising an adhesive composition according to the present invention and at least one additive. The additive(s) is/are non-aromatic additive(s). The additive(s) can be added to the solid part(s) and/or the liquid part(s) of the adhesive composition when the latter is a two- or multi-part composition. Exemplary additives usable in the invention include clays, in particular, an intercalated clay, partially exfoliated clay, exfoliated clay, for example montmorillonite, cellulose nanoparticles, catalysts, tacking agents, extenders, fillers, viscosifying agents, surfactants, adhesion promoters, antioxidants, antifoaming agents, antimicrobial agents, antibacterial agents, fungicides, pigments, inorganic particles (e.g., titanium dioxide, yellow iron oxide, red iron oxide, black iron oxide, zinc oxide, aluminum oxide, aluminum trihydrate, calcium carbonate, magnesium oxide), gelling agents, aerosolizing agents, cross-linking agents, agents that improve moisture resistance, pH modulators other than organic polycarboxylic acid compounds as defined above, composite-release promoters, formaldehyde scavenging agents, fire retardants, wetting agents, and wood preservatives.

The at least one additive may be a water-dispersible additive or a water-soluble additive. Water-soluble additives include hydroxyl-functional or amine-functional compounds.

The at least one additive may also be a non-volatile (*e.g.*, having a boiling point of greater than about 180°C, at atmospheric pressure), inert viscosity-reducing diluent.

The at least one additive may be at least one agent that improves moisture-resistance, a composite-release promoter (such as a composite-release promoter selected from the group consisting of a $C_{10\text{-}25}$ alkanoic acid, a salt of a $C_{10\text{-}25}$ alkanoic acid, a $C_{10\text{-}25}$ alkenoic acid, a salt of an $C_{10\text{-}25}$ alkenoic acid, and a silicone).

In particular, the at least one additive may be a fire retardant, wood preservative, antimicrobial agent, antibacterial agent or fungicide, any of which may be in the form of nanoparticles.

Advantageously, if the adhesive composition comprises one or more additives, each additive present in the adhesive composition is independently present in an amount ranging from 0.001% (w/w) to about 20% (w/w), from 0.01% (w/w) to about 20% (w/w) from 0.1% (w/w) to about 15% (w/w), from 0.1% (w/w) to about 10% (w/w), from 0.5% (w/w) to about 20% (w/w), from 0.5% (w/w) to about 15% (w/w), from 0.5% (w/w) to about 10% (w/w), from 0.5% (w/w) to about 5% (w/w), from 1% (w/w) to about 20% (w/w), from 1% (w/w) to about 10% (w/w), from 1% (w/w) to about 5% (w/w), from 1% (w/w) to about 3% (w/w) or from 5% (w/w) to about 10% (w/w).

In certain embodiments, for example when the additive is a fire retardant, the additive may be present in the adhesive composition in an amount ranging from about 1% (w/w) to about 40% (w/w), from about 10% (w/w) to about 40% (w/w), from about 20% (w/w) to about 40% (w/w), or from about 25% (w/w) to about 35% (w/w).

It should be noted that some of the below-listed additives are solid under normal temperature and pressure (*i.e.*, 20°C and 1 atm). Therefore they can be added to the solid part(s) of the adhesive composition or added to the liquid part(s) of the adhesive composition provided that it is dissolved in said adhesive composition.

In certain embodiments, the additives (in solid and/or liquid form) can be added to the lignocellulosic material at any step of the process of the invention.

Advantageously, the adhesive composition of the invention comprises at least 2 wt% crude protein, at least 5 wt% non-aromatic polyol and at least 5 wt% organic polycarboxylic acid compound, the percent being by weight relative to the total weight of the adhesive composition. Preferably, the adhesive composition comprises at least 3 wt% crude protein, at least 10 wt% non-aromatic polyol and at least 10 wt% organic polycarboxylic acid compound, the percent being by weight relative to the total weight of the adhesive composition.

Advantageously, the adhesive composition of the invention comprises:

- crude protein representing from 2% to 35% in weight percent over the total dry matter weight of the adhesive composition, preferably from 2.5% to 25%, more preferably from 3% to 15%, even more preferably from 3% to 10%, most preferably from 3% to 8%,
- the organic polycarboxylic acid compound representing from 5% to 70% in weight percent over the total dry matter weight of the adhesive composition, preferably from 10% to 60%, more preferably from 15% to 55%, even more preferably from 20% to 50%, most preferably from 25% to 40%,
- the non-aromatic polyol representing from 5% to 70% in weight percent over the total dry matter weight of the adhesive composition, preferably from 10% to 60%, more preferably from 15% to 55%, even more preferably from 20% to 50%, most preferably from 25% to 40%.

In another embodiment of the process according to the invention, the weight ratio of the organic polycarboxylic acid compound comprising at least two (preferably at least three) carboxyl functional groups / lignocellulosic material (dry weight / dry weight) is comprised between 1.5% and 15%, preferably between 1.5% and 8%.

In another embodiment of the process according to the invention, the weight ratio of protein / lignocellulosic material (dry weight / dry weight) is comprised between 0.5% and 10%, preferably between 0.5% and 3%.

In another embodiment of the process according to the invention, the weight ratio of the non-aromatic polyol comprising at least two (preferably at least three) hydroxyl functional groups / lignocellulosic material (dry weight / dry weight) is comprised between 1% and 15%, preferably between 1.5% and 8%. Advantageously, the viscosity of the adhesive composition of the invention at 20°C and at 1 atm is less than 1000 mPa.s, preferably, less than 500 mPa.s, more preferably, less than 400 mPa.s and, even more preferably, less than 300 mPa.s. Such an advantageous viscosity allows the adhesive composition to be sprayable, in particular at the industrial scale.

Advantageously, the adhesive composition of the invention is in the form of a solution or a dispersion.

The resinating step b. of the process of the invention is carried out by adding the adhesive composition to the lignocellulosic material and optionally by mixing together the adhesive composition and the lignocellulosic material to provide a mixture of lignocellulosic material impregnated with said adhesive composition. As mentioned above, the adhesive composition is substantially free from an oligoester obtainable by esterification of glycerol and citric acid, and more generally substantially free from an oligoester obtainable by esterification of an organic polycarboxylic acid compound and a polyol and in particular by esterification of the organic polycarboxylic acid compound and the non-aromatic polyol contained in the adhesion composition of the invention. The mixture can be obtained using a blender when, for example, lignocellulosic material used is in the form of chips or strands, or a blow line when, for example, lignocellulosic material used is in the form of fiber. The mixing is advantageously carried out for at least 2 min, preferably at least 5 min. Resinating a lignocellulosic material with an adhesive composition is well-known in the art.

In step c. of the process of the invention, the pressing step is carried out before and/or simultaneously to the curing step. Preferably, the press factor is comprised between 2 s/mm and 50 s/mm, more preferably, between 4 s/mm and 35 s/mm, even more preferably, between 6 s/mm and 20 s/mm. It is understood that the unit "s/mm" refers to the pressing time in seconds with respect to the thickness of the lignocellulosic material impregnated with the first and the second adhesive compositions. For example, a pressing factor of 10 s/mm and a thickness of 12 mm mean that the pressing time is carried out during 120 s.

In step c. of the process of the invention, the curing step can be carried out by heating the lignocellulosic material impregnated with the adhesive composition at a curing temperature comprised between 120°C and 250°C, more preferably, between 150°C and 230°C, even more preferably, between 180°C and 210°C. Upon curing, the adhesive composition forms a solid binder.

Preferably, step c. of the process of the invention comprises the pressing and curing steps described before. More preferably, the curing and pressing steps are performed simultaneously.

In an advantageous embodiment of the invention, the lignocellulosic-based article is provided after placing the lignocellulosic material impregnated with the adhesive composition into a mold or arranging the lignocellulosic material impregnated with the adhesive composition in the form of a mat, followed by curing and optionally pressing the lignocellulosic material impregnated with the adhesive composition as described before. In other words, the process of the invention comprises an additional step after step b. and before step c., said additional step consisting of placing the lignocellulosic material impregnated with the adhesive composition into a mold or arranging the lignocellulosic material impregnated with the adhesive composition in the form of a mat.

In a preferred embodiment of the process according to the invention, the lignocellulosic-based article is a multi-layer lignocellulosic-based article comprising a core layer and two surface layers, each layer comprising or consisting of lignocellulosic material, said process comprising the following steps:

a. providing lignocellulosic material and an adhesive composition, as defined above, in particular comprising at least three different components which are a protein, an organic polycarboxylic acid compound and a non-aromatic polyol and optionally water; provided that if said organic polycarboxylic acid compound comprises only two carboxyl functional groups then said polyol comprises at least three hydroxyl functional groups and if said polyol comprises only two hydroxyl functional groups then said organic polycarboxylic acid compound comprises at least three carboxyl groups, provided that said adhesive composition is substantially free from an oligoester obtainable by esterification of glycerol and citric acid, more generally any oligoester obtainable by an esterification reaction of the organic polycarboxylic acid compound and the polyol , and even more generally any oligoester obtainable by an esterification reaction of an organic polycarboxylic acid compound and a polyol, and provided that if the adhesive composition comprises one or more additional components, then the latter is/are non-aromatic components,

b1. resinating the lignocellulosic material forming the core layer, by adding the adhesive composition of the invention to a lignocellulosic material, to provide a lignocellulosic material impregnated with the adhesive composition,

b2. resinating the lignocellulosic material forming the surface layers, by adding the adhesive composition of the invention to a lignocellulosic material, to provide a lignocellulosic material impregnated with the adhesive composition,

c1. forming a mat with the lignocellulosic material forming the core layer impregnated with the adhesive composition and the lignocellulosic material forming the two surface layers impregnated with the adhesive composition, and

c2. curing the adhesive compositions impregnating the lignocellulosic material forming the core layer and the lignocellulosic material forming the surface layers whereby a multi-layer lignocellulosic-based article comprising a core layer and two surface layers is obtained.

The adhesive composition according to the invention implemented in step b1. can be identical to or different from the adhesive composition according to the invention implemented in step b2..

In another embodiment of the process according to the invention, the lignocellulosic-based article is a multi-layer lignocellulosic-based article comprising a core layer and two surface layers, each layer comprising or consisting of lignocellulosic material, and the lignocellulosic material forming at least one layer, preferably the two surface layers, are resinated with the adhesive composition of the invention, as defined above, and the lignocellulosic material forming the other layers, preferably the core layer, is resinated with an adhesive composition different from the adhesive composition of the invention.

In another preferred embodiment of the process according to the invention, the lignocellulosic-based article is a multi-layer lignocellulosic-based article comprising a core layer and two surface layers, each layer comprising or consisting of lignocellulosic material, said process comprising the following steps:

a1. providing lignocellulosic material,

a2. providing a first adhesive composition according to the invention, as defined above, comprising at least three components which are a protein, an organic polycarboxylic acid compound and a non-aromatic polyol and optionally water; provided that if said organic polycarboxylic acid compound comprises only two carboxyl functional groups then said polyol comprises at least three hydroxyl functional groups and if said polyol comprises only two hydroxyl functional groups then said organic polycarboxylic acid compound comprises at least three carboxyl functional groups, provided that said adhesive composition is substantially free from an oligoester obtainable by esterification of glycerol and citric acid, and generally any oligoester obtainable by an esterification reaction of the organic polycarboxylic acid compound and the polyol, and even more any oligoester obtainable by an esterification reaction of an organic polycarboxylic acid compound and a polyol, and provided that if the adhesive composition comprises one or more additional components, then the latter is/are non-aromatic components,

a3. providing a second adhesive composition different from the first adhesive composition,

b1. resinating the lignocellulosic material forming the core layer, by adding the second adhesive composition to a lignocellulosic material, to provide a lignocellulosic material impregnated with the second adhesive composition,

b2. resinating the lignocellulosic material forming the surface layers, by adding the first adhesive composition to a lignocellulosic material, to provide a lignocellulosic material impregnated with the first adhesive composition,

c1. forming a mat with the lignocellulosic material forming the core layer impregnated with the second adhesive composition and the lignocellulosic material forming the two surface layers impregnated with the first adhesive composition,

c2. curing the adhesive compositions impregnating the lignocellulosic material forming the core layer and the lignocellulosic material forming the surface layers whereby a multi-layer lignocellulosic-based article comprising a core layer and two surface layers is obtained.

In the processes according to the invention, the adhesive composition is not subjected to any conditions permitting esterification between the organic polycarboxylic acid compound such as, for example, citric acid and the non-aromatic polyol such as, for example, sucrose it contains prior to and during step a., prior to and during step a1., prior to and during step a2., between steps a. and b1., between steps a. and b2., between steps a2 and b2., between step a3. and b1., during step b., during step b1. and during step b2..

In an advantageous embodiment of the process according to the invention, the adhesive composition, as defined above, is a two- or multi-part adhesive composition, preferably a two-part adhesive composition comprising a liquid part comprising an organic polycarboxylic acid compound, a non-aromatic polyol and water, and a solid part comprising a protein.

The second adhesive composition defined in step a3. above can comprise or consist of:

- a protein-based adhesive, such as soy flour,
- a polyamidoamine-epichlorohydrin (PAE) resin, a PAE-based resin, a polyalkylenepolyamine-epichlorohydrin resin, an itaconic acid-based polyamidoamine-epichlorohydrin resin and/or an amine polymer-epichlorohydrin resin,
- an epoxy resin such as bisphenol A diglycidyl ether epoxy resin,
- an isocyanate resin and/or isocyanate-based resin,
- an urea-formaldehyde (UF) resin, melamine-formaldehyde resin, melamine-urea-formaldehyde (MUF) resin, phenol-formaldehyde resin, resorcinol-formaldehyde resin, other resins based on formaldehyde or on another aldehyde such as furfural, propanal, butyraldehyde, succinaldehyde, glutaraldehyde, dimethoxyethanal, glyoxylic acid, glycolaldehyde, vanillin,
- a polyurethane-based resin,
- a polyacid-based resin such as based on maleic anhydride or acetic acid,
- an acrylate-based or methacrylate-based resin such as poly(methyl methacrylate), ethylene vinyl acetate (EVA), ethylene-co-vinylacetate-co-acrylic acid, ethylene-co-vinylacetate-co-methacrylic acid, ethylene-co-vinylacetate-co-vinylalcohol, carboxylated vinyl acetate-ethylene copolymers, ethylene vinyl alcohol (EVOH), polyvinylalcohol, polyvinylbutyral-co-vinylalcohol, polyvinylacetate-co-vinylalcohol, or
- a mixture thereof.

The second adhesive composition is preferably selected from the group consisting of:

- a mixture of a protein and a polyamidoamine-epichlorohydrin (PAE) resin, and
- an urea-formaldehyde resin.

The lignocellulosic material includes straw, paper, cardboard, wood flour (or powder) wood sawdust, wood fibers, wood strands (or flakes), wood particles (or chips) or a mixture thereof, preferably wood strands or wood particles, more preferably wood particles.

The lignocellulosic material is preferably wood. Preferably, the wood is pine wood, spruce wood, birch wood and/or beech wood. More preferably, the wood is spruce wood.

The lignocellulosic material forming the core and surface layers can be identical or different. The lignocellulosic materials can differ by their nature but also, for a same type of lignocellulosic material, by at least one physical characteristic such as, for example, the average particle size. In a particular example of this embodiment, one can cite wood particles used as lignocellulosic material for the surface layers which present a smaller average particle size than wood particles used as lignocellulosic material for the core layer, the wood species implemented for these two lignocellulosic materials being identical or different, preferably identical.

Preferably the lignocellulosic-based article include a wood board (or wood-based panel), preferably fiberboard (low-, medium- or high density fiberboard), plywood, oriented, strand board (OSB) or particleboard (or chipboard), more preferably particleboard.

The invention also relates to a lignocellulosic mat (useful for preparing a lignocellulosic-based article of the invention), preferably a three-layer lignocellulosic mat, comprising lignocellulosic material impregnated with an adhesive composition as defined above in particular comprising at least three different components which are a protein, an organic polycarboxylic acid compound and a non-aromatic polyol and optionally water; provided that if said organic polycarboxylic acid compound comprises only two carboxyl functional groups then said polyol comprises at least three hydroxyl functional groups and if said polyol comprises only two hydroxyl functional groups then said organic polycarboxylic acid compound comprises at least three carboxyl functional groups, provided that said adhesive composition is substantially free from an oligoester obtainable by esterification of glycerol and citric acid, more generally any oligoester obtainable by an esterification reaction of the organic polycarboxylic acid compound and the non-aromatic polyol, and even more any oligoester obtainable by an esterification reaction of an organic polycarboxylic acid compound and a polyol, and provided that if the adhesive composition comprises one or more additional components, then the latter is/are non-aromatic components.

The invention also relates to a multi-layer lignocellulosic mat (useful for preparing a multi-layer lignocellulosic-based article of the invention), preferably a three-layer lignocellulosic mat, comprising:

- a core layer comprising

  ○ a lignocellulosic material impregnated with an adhesive composition as defined above in particular comprising at least three different components which are a protein, an organic polycarboxylic acid compound and a non-aromatic polyol and optionally water; provided that if said organic polycarboxylic acid compound comprises only two carboxyl functional groups then said polyol comprises at least three hydroxyl groups and if said polyol comprises only two hydroxyl functional groups then said organic polycarboxylic acid compound comprises at least three carboxyl functional groups, provided that said adhesive composition is substantially free from an oligoester obtainable by esterification of glycerol and citric acid, more generally any oligoester obtainable by an esterification reaction of the organic polycarboxylic acid compound and the non-aromatic polyol, and even more generally substantially free from any oligoester obtainable by an esterification reaction of an organic polycarboxylic acid compound and a polyol, and provided that if the adhesive composition comprises one or more additional components, then the latter is/are non-aromatic components, or
  ○ a lignocellulosic material impregnated with an adhesive composition consisting of a protein-based adhesive, a polyamidoamine-epichlorohydrin (PAE) resin, a polyalkylenepolyamine-epichlorohydrin resin, an itaconic acid-based polyamidoamine-epichlorohydrin resin and/or an amine polymer-epichlorohydrin resin, an epoxy resin such as bisphenol A diglycidyl ether epoxy resin, isocyanate resin, urea-formaldehyde (UF) resin, melamine-formaldehyde resin, melamine-urea-formaldehyde (MUF) resin, phenol-formaldehyde resin, resorcinol-formaldehyde resin, other resins based on formaldehyde or on another aldehyde such as furfural, propanal, butyraldehyde, succinaldehyde, glutaraldehyde, dimethoxyethanal, glyoxylic acid, glycolaldehyde, vanillin, a polyurethane-based resin, a polyacid-based resin such as based on maleic anhydride or acetic acid, an acrylate-based or methacrylate-based resin such as poly(methyl methacrylate), ethylene vinyl acetate (EVA), ethylene-co-vinylacetate-co-acrylic acid, ethylene-co-vinylacetate-co-methacrylic acid, ethylene-co-vinylacetate-co-vinylalcohol, carboxylated vinyl acetate-ethylene copolymers, ethylene vinyl alcohol (EVOH), polyvinylalcohol, polyvinylbutyral-co-vinylalcohol, polyvinylacetate-co-vinylalcohol, and a mixture thereof,

- two surface layers comprising a lignocellulosic material impregnated with an adhesive composition according to the invention, in particular, comprising at least three different components which are a protein, an organic polycarboxylic acid compound and a non-aromatic polyol and water; provided that if said organic polycarboxylic acid compound comprises only two carboxyl functional groups then said polyol comprises at least three hydroxyl functional groups and if said polyol comprises only two hydroxyl functional groups then said organic polycarboxylic acid compound comprises at least three carboxyl functional groups, provided that said adhesive composition is substantially free from an oligoester obtainable by esterification of glycerol and citric acid, more generally any oligoester obtainable by an esterification reaction of the organic polycarboxylic acid compound and the non-aromatic polyol, and even more generally substantially free from any oligoester obtainable by an esterification reaction of an organic polycarboxylic acid compound and a polyol, and provided that if the adhesive composition comprises one or more additional components, then the latter is/are non-aromatic components,.

The invention also relates to a lignocellulosic-based article, preferably a multi-layer lignocellulosic-based article, more preferably a three-layer lignocellulosic-based article, most preferably an oriented strand board or a particleboard, obtained by the process according to the invention as described above.

Contrary to the term "comprising", it is understood that the terms "consisting of" exclude the presence of any other additional compound.

By "about" a value, it is meant said value plus or minus 10%.

In the context of the present application, and unless otherwise stipulated, the ranges of values indicated are understood to be inclusive.

The invention will be better understood in the light of the following examples.

**Example 1: Materials and methods of all the examples (unless otherwise specified) Materials**

The plant based raw materials used in this study were pea (*Pisum sativum*) protein isolate, whole yellow pea seeds (*Pisum sativum*), solvent (hexane)-extracted sunflower (*Helianthus annuus*) meal, solvent (hexane)-extracted rapeseed (*Brassica napus*) meal and ground solvent (hexane)-extracted soy meal. Pea protein isolate was provided by Myprotein (France) in powder form and used as received. Whole yellow pea seeds (*Pisum sativum*) were provided by Sanders (France). Ground solvent extracted soy meal was supplied by ADM (USA) and used as received. Solvent (hexane)-extracted sunflower (Helianthus annuus) meal and solvent (hexane)-extracted rapeseed meal were provided by Saipol (France) in pellet shape.

Pea seeds were ground at the particle size Dv10 = 7 μm; Dv50 = 25 μm; Dv90 = 77 μm with a laboratory grinder from Retsch model ZM 200 with a ring sieve with 80 μm openings and mill speed of 18000 rpm.

Sunflower meal was ground at the particle size Dv10 = 5 μm; Dv50 = 30 μm; Dv90 = 110 μm with an impact mill grinder including a classifier from Hosokawa, model 200ZPS.

Rapeseed meal was ground at the particle size Dv10 = 5 μm; Dv50 = 31 μm; Dv90 = 121 μm with an impact mill grinder including a classifier from Hosokawa, model 200ZPS.

The ground materials were then kept in closed containers.

The particle size of the received ground soy meal was evaluated and found to have a value of Dv10 = 5 μm, Dv50 = 25 μm, and Dv90 = 127 μm.

The particle size of ground samples were measured using a Malvern laser granulometer Mastersizer 3000. Sample material was injected through the dry injection tool of the analyzer. Refractive index and model used were respectively 1.52 and Mie to determine the particle size density profile.

Total crude proteins content of pea flour, ground sunflower meal, ground rapeseed meal and ground soy meal were obtained using Kjeldahl procedure (NF EN ISO 5983-2 : 2009) with a nitrogen-to-protein conversion factor of 6.25 and was respectively 19.0% ± 1.6% wt/wt, 37.0% ± 2.3% wt/wt, 34.0% wt/wt ± 1.9% wt/wt and 51.2% ± 2.0% wt/wt.

The total oil content of pea flour, sunflower meal, rapeseed meal and soy meal was respectively 1.2% wt/wt; 1.2% wt/wt; 1.4% wt/w; and 0.74% wt/wt. The oil contents were measured as follows: oil was extracted with a Soxhlet extractor using n-hexane as solvent. Thereafter, the hexane was separated from oil by using a rotary evaporator at 68°C.

The dry content of pea protein isolate, pea flour, micronized sunflower meal, micronized rapeseed meal and ground soy meal was evaluated respectively at 95% wt/wt, 95% wt/wt, 94% wt/wt, 93% wt/wt and 95% wt/wt.

Food grade citric acid monohydrate was provided by Brenntag (France) in crystal form. Lab grade extra pure sucrose was provided by Fisher Scientific in crystal form. Distilled vegetable glycerin with a glycerol content of at least 99.5% wt/wt was provided by Oleon (France).

The wood particles used for board manufacturing are industrial wood particles containing around 50% recycled wood and with a moisture content of about 7 parts ATRO.

**Dry content determination**

The material was placed in an aluminum cup with an amount of about 2 g. The exact weight was measured with an analytical balance with 4 digits after the decimal point. Then the cup was placed in a fan ventilated oven at 105°C for 3 h. Fan & valve aperture were set at 100% to accelerate water evaporation. Dry content was obtained by measuring the weight of the cup after being removed from the oven immediately or after conditioning in a desiccator to get sample at room temperature. Calculation of dry content was obtained by the calculation of material loss thanks to (1) and (2):

$$m_{loss} = m_0 - m_1 \quad (1)$$

wherein $m_0$ and $m_1$ are respectively the weight of the cup before being placed in the oven and after being placed in the oven.

$$DC\% = 1 - \frac{m_{loss}}{m_{sample}} \quad (2)$$

wherein DC%, $m_{loss}$ and $m_{sample}$ are respectively the dry content, the weight of material loss and the weight of sample tested ($m_0$ - $m_{cup}$).

An alternative method consisted in using a moisture analyzer (Imal UM2000-LTE) to get the dry content or the moisture content. It enabled to have the "ATRO" mode (i.e. moisture content in weight parts over dry composition) required for wood-based panel manufacturing. This method was also faster (i.e. few minutes versus 3 h) but allowed to test only one sample per round. The moisture analyzer was preferably used for wood moisture content determination prior to wood panel making.

Preparation of single layer particleboard at laboratory scale

To manufacture laboratory-made (lab) particleboards (or particle boards), the adhesive composition was blended with wood particles using a planetary blender (Pluton, Minneapolis) with a paste impeller. An amount of wood particles was introduced in the blender tank after moisture content determination which was expected to be around 7% ATRO. This amount was calculated in order to obtain sufficient quantity of glued wood particles to form two panels with the desired density and with a dimension of 200 mm x 200 mm x thickness (thickness may vary depending of the desired target). Then, the adhesive composition was added to the wood furnish. An extra 5 min mixing time was applied to ensure homogenous distribution of the glue with the wood furnish.

Wood particles impregnated with the adhesive composition were weighted to achieve the targeted density of boards (water residue excluded from the calculation), and placed in a forming box, having a size of 200 mm X 200 mm X 200 mm to make the mat. The mat was cold pressed by hand. The mat was then placed into a heating press from CARVER (platen of 250 mm X 250 mm) and pressed to the desired thickness and cured at 200°C during a targeted press factor (expressed in second per millimeter of panel thickness). After pressing, thickness and weight of the particleboards were measured and recorded. Then the boards were placed in a conditioning room at 20°C and 65% r.h. (for "relative humidity") for at least three days before further experiments.

**Preparation of three-layer particleboard at pilot scale**

Pilot scale particleboards were composed of three layers, one core layer made up of wood particles representing 65% of the panel in mass, and two surface layers located respectively on each side of the core layer and made up of smaller wood particles representing 35% of the panel in mass (which each side representing 17.5% of the panel). For pilot scale particleboards manufacturing, wood particles for the core layer were dried beforehand in an oven in order to obtain a moisture content of about 2.5 parts ATRO. They were then stored in airtight containers to avoid re-humidity.

The adhesive solutions used to bind the core layer and the surface layers can be different.

To manufacture pilot three-layer particleboards, two batches of wood particles were prepared; one for the core layer with large wood particles, and one for the two surface layers with smaller wood particles. For each batch, the wood particles were placed in a particle blender (Lab Glue Blender 300 from Imal, Italia,) with the solid adhesive components and blended together. The liquid adhesive components were then added to wood particles by spraying with a spray nozzle into the blender on wood particles during particles mixing. The mixing step was carried on for 5 min. The moisture content of the blend was then measured by using a moisture analyzer (Imal UM2000-LTE).

Afterwards, the adequate amount of impregnated wood particles of the surface layers batch was weighted to form the first bottom surface layer and placed in a forming box in order to prepare the mat. Then, the adequate amount of impregnated wood particles of the core layer batch was weighted to form the core layer and added in the forming box above the previous wood particles in order to prepare the mat. Finally, the same adequate amount of impregnated wood particles of the surface layers batch as the first surface layer was weighted to form the top surface layer and added in the forming box above the previous wood particles in order to prepare the mat. Forming box size was 600 mm x 600 mm x 200 mm to make the mat. The mat was cold pressed by hand. The mat was then placed into a heating press (Imal, Italia, platen of 1000 mm x 1000 mm), pressed to a thickness of 18.5 mm and cured at 210°C to reach a density of 660 kg/m$^3$. One panel was made for each example with a press factor of 8 s/mm (i.e., a total time of 148 seconds). After pressing, thickness and weight of the particleboards were controlled. Then the boards were placed in a conditioning room at 20°C and 65% r.h. for three days and finally sanded to reach a thickness of 18mm.

**Panel characterization**

Lab particleboards (200 mm x 200 mm) were cut to get samples for water resistance and Internal Bond (IB). Pilot particleboards (600 mm x 600 mm) were cut to get samples for water resistance, Internal Bond (IB), Surface Soundness and flexural test.

Flexural tests, Surface Soundness, Water resistance and IB were determined respectively following standard ISO EN 310:1993, ISO EN 311:2002, ISO EN 317:1993 and ISO EN 319:1993 to get Modulus of Rupture (MOR), Modulus of Elasticity (MOE), Surface Soundness (SS), Thickness Swelling (TS) after 24 h in water bath, and Internal Bond (IB). Apparatus used for all these measurements was the Imal (Italia), IBX700 model. The test results are mean values with their standard deviation.

To evaluate the MOE and MOR of pilot particleboards, four test specimens with nominal dimensions of 410 mm x 50 mm x 18 mm were cut from wood particleboards. The MOE and MOR of these samples were determined by a static, three point bending test and the values were calculated and recorded for each specimen.

To determine the Surface Soundness strength, eight test specimens with nominal dimensions of 50.0 mm x 50.0 mm x thickness were cut from test panels for each condition. The SS was calculated and recorded after each specimen was tested to failure.

To determine the Internal Bond strength, eight test specimens with nominal dimensions of 50.0 mm x 50.0 mm x thickness were cut from test panels for each condition. The IB was calculated and recorded after each specimen was tested to failure.

To determine the thickness swell, eight test specimens with nominal dimensions of 50.0 mm x 50.0 mm x thickness were cut from test panels for each condition. The TS that is defined as the percentage increase in the thickness of a specimen after immersing in water for 24 h at room temperature were measured, before and immediately after the 24 h soaking process.

For the mechanical performances (Surface Soundness, Internal Bonding, Modulus of Rupture and Modulus of Elasticity), higher is the value, better is the final board. On the contrary, concerning the Thickness Swelling test of boards immerged in water for 24 h, lower is the value, better is the water resistance of the board.

## Example 2: Particleboards manufacturing with separated and mixed raw materials

Lab particleboards were manufactured using one, a blend of two or blend of three of these raw materials: sucrose, citric acid and pea protein isolate. In all cases, when pea protein isolate was used as component of the adhesive solution, it was added firstly and directly as powder form into wood particles. Moreover, when sucrose or citric acid or both were used as components of the adhesive, they were prepared together as a 70% dry content aqueous solution (liquid part) at ambient temperature and secondly injected using a syringe into wood particles. Lab particleboards with a targeted density of 650 kg/m$^3$ (water residue excluded) and thickness of 12 mm were manufactured following the procedure for laboratory (lab) scale particleboards preparation described in Example 1 and cured at 200°C for 5 min. Quantities of all components used for lab particleboards manufacturing are detailed in Table 1.

Table 1: Adhesive and wood particles compositions containing Sucrose and/or Citric Acid and/or Pea protein isolate

|  | Wood particles (g) | Pea protein isolate (g) | Water for the aqueous solution (g) | Citric Acid (g) | Sucrose (g) | Glued wood weighed for the preparation of one panel (g) |
|---|---|---|---|---|---|---|
| Example 2A | 685.6 | - | 6.2 | - | 14.4 | 336.3 |
| Example 2B | 656.7 | - | 17.8 | 41.4 |  | 340.9 |
| Example 2C | 680.6 | 20.1 | - | - | - | 333.2 |
| Example 2D | 643.2 | - | 23.2 | 40.6 | 13.5 | 343.1 |
| Example 2E | 666.1 | 19.7 | 6.0 | - | 14.0 | 336.1 |
| Example 2F | 638.8 | 18.85 | 17.3 | 40.3 | - | 340.6 |
| Example 2G | 626.0 | 18.5 | 22.6 | 39.5 | 13.2 | 342.7 |

After the conditioning step, these particleboards were cut to get samples for water resistance and Internal Bond (IB) measurements. Results are summarized in Table 2 in which "n/m" means "non measurable" because samples were too weak to be tested or were not in one piece after 24h immersion in water.

Table 2: : Internal Bonding and Thickness Swelling of boards based on adhesives composition containing Sucrose and/or Citric Acid and/or Pea protein isolate

|  | Internal Bonding (N/mm$^2$) | Thickness Swelling after 24h in water (%) |
|---|---|---|
| Example 2A | n/m | n/m |
| Example 2B | 0.08 ± 0.02 | n/m |
| Example 2C | n/m | n/m |
| Example 2D | 0.09 ± 0.02 | n/m |
| Example 2E | n/m | n/m |
| Example 2F | 0.25 ± 0.04 | 74.82 ± 8.66 |
| Example 2G | 0.35 ± 0.03 | 54.18 ± 9.16 |

Formulations from Examples 2F and 2G allowed providing sufficient performances to particleboards, contrary to other formulations. In this example, the best internal bond and water resistance of particleboards were obtained with the adhesive formulation from Example 2G, *i.e.,* the one according to the invention that contains the 3 components sucrose, citric acid and pea protein isolate.

**Example 3: Application of formulation from Example 2G on particleboards with different densities and thickness**

Laboratory-made (lab) particleboards with different targeted densities and thickness were manufactured from the adhesive and manufacturing process described in Example 2G. Targeted densities and thickness for each example are detailed in Table 3 below.

Table 3: Targeted densities and thickness for different particleboards

|  | Density (kg/m$^3$) | Thickness (mm) |
|---|---|---|
| Example 3A | 550 | 4 |
| Example 3B | 650 | 8 |
| Example 2G | 650 | 12 |
| Example 3C | 750 | 16 |
| Example 3D | 750 | 24 |

Quantities of all components used for lab particleboards manufacturing are detailed in Table 4 below.

Table 4: Adhesive and wood particles compositions for different densities and thickness

|  | Wood particles (g) | Pea protein isolate (g) | Water for the aqueous solution (g) | Citric Acid (g) | Sucrose (g) | Glued wood weighed for the preparation of one panel (g) |
|---|---|---|---|---|---|---|
| Example 3A | 176.5 | 5.2 | 6.4 | 11.1 | 3.7 | 96.7 |
| Example 3B | 417.3 | 12.3 | 15.0 | 26.3 | 8.8 | 228.5 |
| Example 2G | 626.0 | 18.5 | 22.6 | 39.5 | 13.2 | 342.7 |
| Example 3C | 963.0 | 28.4 | 34.7 | 60.7 | 20.2 | 527.2 |
| Example 3D | 1444.5 | 42.6 | 52.1 | 91.1 | 30.4 | 790.8 |

After the conditioning step, these particleboards were cut to get samples for water resistance and Internal Bond (IB). Results are summarized in Table 5.

Table 5: : Internal Bonding and Thickness Swelling of boards based on adhesives composition containing Sucrose, Citric Acid and Pea protein isolate, for different densities and thickness

|  | Internal Bonding (N/mm$^2$) | Thickness Swelling after 24h in water (%) |
|---|---|---|
| Example 3A | 0.39 ± 0.05 | 35.10 ± 6.03 |
| Example 3B | 0.32 ± 0.05 | 47.75 ± 6.21 |
| Example 2G | 0.35 ± 0.03 | 54.18 ± 9.16 |
| Example 3C | 0.43 ± 0.07 | 62.78 ± 4.11 |
| Example 3D | 0.29 + 0.04 | 58.50 ± 4.71 |

All performances from the Internal Bonding test from Examples 3A, 3B, 2G, 3C and 3D were able to reach the minimum values to meet the requirements of a P1 type panel (requirements described in the EN 312:2010 norm).

### Example 4: Impact of different protein-containing raw materials

Laboratory-made (lab) particleboards were manufactured from a formulation containing three components : sucrose, citric acid and a protein-containing raw material selected from ground sunflower meal (Example 4A), ground soy meal (Example 4B) and ground yellow pea seeds (Example 4C). The protein-containing raw material was added firstly and directly as powder in wood particles. Sucrose and citric acid were prepared as a 70% dry content aqueous solution (liquid part) at ambient temperature and injected secondly using a syringe in wood particles. Lab particleboards with a targeted density of 650 kg/m$^3$ (water residue excluded) and thickness of 12 mm were manufactured following the procedure for laboratory scale particleboards preparation described before and cured at 200°C for 5 min. Quantities of all components used for lab particleboards manufacturing are detailed in Table 6 below.

Table 6: Adhesive and wood particles compositions for different protein-containing raw materials

|  | Wood particles (g) | Protein-containing raw material (g) | Water for the aqueous solution (g) | Citric Acid (g) | Sucrose (g) | Glued wood weighed for the preparation of one panel (g) |
|---|---|---|---|---|---|---|
| Example 4A | 604.4 | 41.6 | 21.8 | 38.1 | 12.7 | 342.2 |
| Example 4B | 604.4 | 41.6 | 21.8 | 38.1 | 12.7 | 342.2 |
| Example 4C | 604.4 | 41.6 | 21.8 | 38.1 | 12.7 | 342.2 |

After the conditioning step, these particleboards were cut to get samples for Internal Bond (IB) tests. Results are summarized in Table 7.

Table 7: : Internal Bonding of boards based on adhesives composition containing Sucrose, Citric Acid and different protein-containing raw materials

|  | Internal Bonding (N/mm$^2$) |
|---|---|
| Example 4A | 0.35 ± 0.06 |
| Example 4B | 0.37 ± 0.05 |
| Example 4C | 0.42 ± 0.04 |

All performances from the Internal Bonding test from Examples 4A, 4B and 4C were able to reach the minimum values to meet the requirements of a P1 type panel. Nevertheless, one particleboard manufactured from the formulation from Example 4C containing ground yellow pea seeds reaches the minimum values to meet the requirements of a P2 type panel (requirements described in the EN 312:2010 norm).

### Example 5: Different applications of the adhesive components in solid and/or liquid part

Laboratory-made (lab) particleboards were manufactured from a formulation containing three components :

Sucrose, citric acid and ground yellow pea seeds. They were added separately or together, in a solid form or mixed as a aqueous solution (liquid part).

In Example 5A, all components are added separately to wood particles and in solid form.

In Example 5B, sucrose was solubilized in a 60% dry content aqueous solution at ambient temperature and injected using a syringe into wood particles. Citric acid and ground yellow pea seeds were added in solid form into wood particles.

In Example 5C, citric acid was solubilized in a 60% dry content aqueous solution at ambient temperature and injected using a syringe into wood particles. Sucrose and ground yellow pea seeds were added in solid form into wood particles.

In Example 5D, citric acid and sucrose were solubilized together in a 60% dry content aqueous solution at ambient temperature and injected using a syringe into wood particles. Ground yellow pea seeds were added in solid form into wood particles.

In Example 5E, citric acid, sucrose and ground yellow pea seeds were solubilized and mixed together in a 60% dry content aqueous solution at ambient temperature and injected using a syringe into wood particles.

From formulations described above, lab particleboards with a targeted density of 650 kg/m$^3$ (water residue excluded) and thickness of 12 mm were manufactured following the procedure for laboratory scale particleboards preparation described in Example 1 and cured at 200°C for 5 min. Quantities of all components used for lab particleboards manufacturing are detailed in Table 8.

Table 8: Adhesive application for different methods of addition into wood particles

|  | Wood particles (g) | Water for the aqueous solution (g) | Ground yellow pea seeds (g) | Citric Acid (g) | Sucrose (g) | Glued wood weighed for the preparation of one panel (g) |
|---|---|---|---|---|---|---|
| Example 5A | 604.4 | - | 41.6 | 38.1 | 12.7 | 331.8 |
| Example 5B | 604.4 | 8.5 | 41.6 | 38.1 | 12.7 | 335.8 |
| Example 5C | 604.4 | 25.4 | 41.6 | 38.1 | 12.7 | 343.9 |
| Example 5D | 604.4 | 33.9 | 41.6 | 38.1 | 12.7 | 348.0 |
| Example 5E | 604.4 | 58.2 | 41.6 | 38.1 | 12.7 | 359.5 |

After the conditioning step, these particleboards were cut to get samples for water resistance and Internal Bond (IB). Results are summarized in Table 9 ("n/m" means "non measurable" because samples were too weak to be tested or were not in one piece after 24h immersion in water).

Table 9: Internal Bonding and Thickness Swelling of boards based on adhesives composition containing Sucrose, Citric Acid and ground yellow pea seeds with different methods of addition into wood particles

|  | Internal Bonding (N/mm$^2$) | Thickness Swelling after 24h in water (%) |
|---|---|---|
| Example 5A | 0.13 $\pm$ 0.06 | n/m |
| Example 5B | 0.20 $\pm$ 0.03 | n/m |
| Example 5C | 0.38 $\pm$ 0.04 | 53.73 $\pm$ 7.44 |
| Example 5D | 0.38 $\pm$ 0.03 | 57.73 $\pm$ 5.72 |
| Example 5E | 0.48 $\pm$ 0.03 | 52.95 $\pm$ 7.87 |

Particleboards from Examples 5A and 5B were too weak to obtain a sufficient water resistance. These samples lost their integrity in the water bath. Moreover, internal bonding results are too low to reach the minimum values to meet the requirements of a P1 type panel. However, particleboards from Examples 5C, 5D and particularly 5E showed good internal bonding values and correct water resistance. The common point between these 3 Examples was citric acid in an aqueous solution. Moreover, when all components were mixed together in aqueous solution, particleboards manufactured with this formulation reached the higher internal bonding value.

Example 6: Application on three-layer particleboards with UF resin in the Core layer

A Formulation based on citric acid, sucrose and ground yellow pea seeds was applied on the surface layers of pilot three-layers particleboards, while the core layer was glued with a Urea-Formaldehyde resin (RES1230 from Foresa, 65% dry content) containing a 50% ammonium nitrate solution as catalyst. Ground yellow pea seeds were added in solid form into surface layers wood particles. Citric acid and sucrose were solubilized together in a 60% dry content aqueous solution (liquid part) at ambient temperature and sprayed using a nozzle into surface layers wood particles.

The pilot three-layer particleboards manufacturing followed the described method in Example 1. Quantities of all components used for three layers particleboards manufacturing are detailed in Table 10 and Table 11.

Table 10: Adhesive application for core layer wood particles

|  | Wood particles (g) | UF resin (g) | Ammonium Nitrate solution (g) | Glued wood weighed for the mat preparation of the core layer (g) |
|---|---|---|---|---|
| **Core layer** | 7000 | 1103 | 49 | 3075 |

Table 11: Adhesive application for surface layers wood particles

|  | Wood particles (g) | Adhesive preparation 1 Solid part | Adhesive preparation 2 Liquid part | | | Glued wood weighed for the mat preparation of one surface layer (g) |
|---|---|---|---|---|---|---|
|  |  | Ground yellow pea seeds (g) | Water (g) | Citric acid (g) | Sucrose (g) |  |
| **Surface layers** | 7000 | 487 | 252 | 442 | 147 | 845 |

After the conditioning step, these particleboards were cut to get samples for Internal Bond (IB), Surface Soundness (SS), Flexural tests for determination of Modulus of Rupture (MOR) and Modulus of Elasticity (MOE), and water resistance with Thickness Swelling after 24 hours in water (TS). Results are summarized in Table 12.

Table 12: Mechanical performances and water resistance of a pilot three-layers particleboard

|  | Internal Bonding (N/mm$^2$) | Surface Soundness (N/mm$^2$) | Modulus of Rupture (N/mm$^2$) | Modulus of Elasticity (N/mm$^2$) | Thickness Swelling after 24h in water |
|---|---|---|---|---|---|
| Example 6 | 0.48 ± 0.03 | 0.89 ± 0.07 | 11.2 ± 0.8 | 2343 ± 269 | 30.5 ± 2.4 |

All mechanical performances were able to reach the minimum values to meet the requirements of a P2 type panel (requirements described in the EN 312:2010 norm).

## Example 7: Application on three-layer particleboards with protein and PAE-based resin in the core layer

A Formulation based on citric acid, sucrose and ground yellow pea seeds was applied on the surface layers of pilot three-layers particleboards, while the core layer was glued with a two-part adhesive as described in International application WO2023089119 A1 containing a solid part consisting of micronized sunflower meal (94% dry content) and a liquid part (52% dry content) with a dry content composed of 23% of a polyamidoamine epichlorohydrin (PAE) resin, 31% of urea and 46% of glycerol. Ground yellow pea seeds were added in solid form into surface layers wood particles. Citric acid and sucrose were solubilized together in a 60% dry content aqueous solution (liquid part) at ambient temperature and sprayed using a nozzle into surface layers wood particles.

The pilot three-layer particleboards manufacturing followed the described method in Example 1. Quantities of all components used for three layers particleboards manufacturing are detailed in Table 13 and Table 14.

Table 13 : Adhesive application for core layer wood particles

|  | Wood particles (g) | Solid part (g) | Liquid part (g) | Glued wood weighed for the mat preparation of the core layer (g) |
|---|---|---|---|---|
| **Core layer** | 7000 | 363 | 859 | 3100 |

Table 14: Adhesive application for surface layers wood particles

| | Wood particles (g) | Adhesive preparation 1 Solid part | Adhesive preparation 2 Liquid part | | | Glued wood weighed for the mat preparation of one surface layer (g) |
|---|---|---|---|---|---|---|
| | | Ground yellow pea seeds (g) | Water (g) | Citric acid (g) | Sucrose (g) | |
| **Surface layers** | 7000 | 487 | 252 | 442 | 147 | 845 |

After the conditioning step, these particleboards were cut to get samples for Internal Bond (IB), Surface Soundness (SS), Flexural tests for determination of Modulus of Rupture (MOR) and Modulus of Elasticity (MOE), and water resistance with Thickness Swelling after 24 hours in water (TS). Results are summarized in Table 15.

Table 15: Mechanical performances and water resistance of a pilot three-layer particleboard

| | Internal Bonding (N/mm$^2$) | Surface Soundness (N/mm$^2$) | Modulus of Rupture (N/mm$^2$) | Modulus of Elasticity (N/mm$^2$) | Thickness Swelling after 24h in water |
|---|---|---|---|---|---|
| Example 7 | 0.45 ± 0.08 | 0.82 ± 0.1 | 12.6 ± 0.3 | 2535 ± 54 | 39.1 ± 3.2 |

All mechanical performances were able to reach the minimum values to meet the requirements of a P2 type panel (requirements described in the EN 312:2010 norm).

## Example 8 : Application on three-layer particleboards with a protein and PAE-based resin in the core layer

A Formulation based on citric acid, glycerol and ground yellow pea seeds was applied on the surface layers of pilot three-layer particleboards, while the core layer was glued with a two-part adhesive as described in International application WO2023089119 A1 containing a solid part consisting of micronized sunflower meal (94% dry content) and a liquid part (52% dry content) with a dry content composed of 23% of a polyamidoamine epichlorohydrin (PAE) resin, 31% of urea and 46% of glycerol. Ground yellow pea seeds were added in solid form into surface layers wood particles. Citric acid and sucrose were solubilized together in a 60% dry content aqueous solution (liquid part) at ambient temperature and sprayed using a nozzle into surface layers wood particles.

The pilot three-layer particleboards manufacturing followed the described method in Example 1. Quantities of all components used for three-layer particleboards manufacturing are detailed in Table 16 and Table 17.

Table 16: Adhesive application for core layer wood particles

| | Wood particles (g) | Solid part (g) | Liquid part (g) | Glued wood weighed for the mat preparation of the core layer (g) |
|---|---|---|---|---|
| **Core layer** | 7000 | 363 | 859 | 3100 |

Table 17: Adhesive application for surface layers wood particles

| | Wood particles (g) | Adhesive preparation 1 Solid part | Adhesive preparation 2 Liquid part | | | Glued wood weighed for the mat preparation of one surface layer (g) |
|---|---|---|---|---|---|---|
| | | Ground yellow pea seeds (g) | Water (g) | Citric acid (g) | Glycerol (g) | |
| **Surface layers** | 7000 | 487 | 252 | 442 | 147 | 845 |

After the conditioning step, these particleboards were cut to get samples for Internal Bond (IB), Surface Soundness (SS), Flexural tests for determination of Modulus of Rupture (MOR) and Modulus of Elasticity (MOE), and water resistance with Thickness Swelling after 24 hours in water (TS). Results are summarized in Table 18.

Table 18: Mechanical performances and water resistance of a pilot three-layer particleboard

| | Internal Bonding (N/mm$^2$) | Surface Soundness (N/mm$^2$) | Modulus of Rupture (N/mm$^2$) | Modulus of Elasticity (N/mm$^2$) | Thickness Swelling after 24h in water |
|---|---|---|---|---|---|
| Example 8 | 0.45 $\pm$ 0.1 | 0.83 $\pm$ 0.12 | 11.2 $\pm$ 2.2 | 2434 $\pm$ 442 | 38.0 $\pm$ 2.3 |

All mechanical performances are able to reach the minimum values to meet the requirements of a P2 type panel (requirements described in the EN 312:2010 norm).

## Claims

1. An adhesive composition comprising at least three different components which are a protein, an organic polycarboxylic acid compound and a non-aromatic polyol and optionally water;

   provided that if said organic polycarboxylic acid compound comprises only two carboxyl functional groups then said polyol comprises at least three hydroxyl functional groups and if said polyol comprises only two hydroxyl functional groups then said organic polycarboxylic acid compound comprises at least three carboxyl functional groups,
   provided that said adhesive composition is substantially free from an oligoester obtainable by esterification of glycerol and citric acid and
   provided that if the adhesive composition comprises one or more additional components, then the latter is/are non-aromatic components.

2. The adhesive composition according to claim 1, wherein the organic polycarboxylic acid compound is selected from the group consisting of succinic acid, tartaric acid, malic acid, oxalic acid, malonic acid, maleic acid, fumaric acid, adipic acid, glutaric acid, suberic acid, isophthalic acid, terephthalic acid, itaconic acid, citric acid, aconitic acid, isocitric acid, oxalosuccinic acid, tricarballylic acid, trimesic acid and a combination thereof, preferably tartaric acid, malic acid, glutaric acid, citric acid and a combination thereof.

3. The adhesive composition according to claim 1 or 2, wherein the polyol is selected from the group consisting of ethylene glycol, diethylene glycol, triethylene glycol, tetraethylene glycol, glycerol monolaurate, propylene glycol, glycerol, polyglycerol, erythritol, threitol, arabitol, xylitol, ribitol, mannitol, sorbitol, galactitol, fucitol, iditol, sucrose, inositol, volemitol, isomalt, maltitol, lactitol, maltotriitol, maltotetraitol, fructose, glucose and a combination thereof, preferably diethylene glycol, triethylene glycol, propylene glycol, glycerol, polyglycerol, sucrose and a combination thereof.

4. The adhesive composition according to anyone of claims 1 to 3, wherein the protein is selected from the group consisting of ground plant seed, a plant seed meal or flour, a plant protein concentrate and a plant protein isolate.

5. The adhesive composition according to anyone of claims 1 to 4, wherein it further comprises an additive.

6. The adhesive composition according to anyone of claims 1 to 5, wherein it comprises at least 2 wt% crude protein, at least 5 wt% non-aromatic polyol and at least 5 wt% organic polycarboxylic acid compound, the percent being by weight relative to the total weight of the adhesive composition.

7. The adhesive composition according to anyone of claims 1 to 6, wherein it has a viscosity at 20°C and at 1 atm of less than 1000 mPa.s.

8. The adhesive composition according to anyone of claims 1 to 7, wherein it is a one-part adhesive composition, a two-part adhesive composition or a multi-part adhesive composition.

9. A process for preparing a lignocellulosic-based article comprising the steps of:

   a. providing lignocellulosic material and an adhesive composition according to anyone of claims 1 to 8,
   b. resinating the lignocellulosic material with the adhesive composition,

c. curing and optionally pressing the lignocellulosic material impregnated with the adhesive composition, thereby forming the lignocellulosic-based article.

10. A process according to claim 9, wherein the lignocellulosic-based article is a multi-layer lignocellulosic-based article comprising a core layer and two surface layers, each layer comprising or consisting of lignocellulosic material, comprising:

a. providing lignocellulosic material and an adhesive composition according to anyone of claims 1 to 8,
b1. resinating the lignocellulosic material forming the core layer, by adding the adhesive composition to a lignocellulosic material, to provide a lignocellulosic material impregnated with the adhesive composition,
b2. resinating the lignocellulosic material forming the surface layers, by adding the adhesive composition to a lignocellulosic material, to provide a lignocellulosic material impregnated with the adhesive composition,
c1. forming a mat with the lignocellulosic material forming the core layer impregnated with the adhesive composition and the lignocellulosic material forming the two surface layers impregnated with the adhesive composition, and
c2. curing the adhesive compositions impregnating the lignocellulosic material forming the core layer and the lignocellulosic material forming the surface layers whereby a multi-layer lignocellulosic-based article comprising a core layer and two surface layers is obtained.

11. A process according to claim 9, wherein the lignocellulosic-based article is a multi-layer lignocellulosic-based article comprising a core layer and two surface layers, each layer comprising or consisting of lignocellulosic material, comprising:

a1 providing lignocellulosic material,
a2. providing a first adhesive composition according to anyone of claims 1 to 8,
a3. providing a second adhesive different from the first adhesive composition,
b1. resinating the lignocellulosic material forming the core layer, by adding the second adhesive composition to a lignocellulosic material, to provide a lignocellulosic material impregnated with the second adhesive composition,
b2. resinating the lignocellulosic material forming the surface layers, by adding the first adhesive composition to a lignocellulosic material, to provide a lignocellulosic material impregnated with the first adhesive composition,
c1. forming a mat with the lignocellulosic material forming the core layer impregnated with the second adhesive composition and the lignocellulosic material forming the two surface layers impregnated with the first adhesive composition,
c2. curing the adhesive compositions impregnating the lignocellulosic material forming the core layer and the lignocellulosic material forming the surface layers whereby a multi-layer lignocellulosic-based article comprising a core layer and two surface layers is obtained.

12. A process according to claim 11, wherein the second adhesive composition comprises or consists of:

- a protein-based adhesive, such as soy flour,
- a polyamidoamine-epichlorohydrin (PAE) resin, a PAE-based resin, a polyalkylenepolyamine-epichlorohydrin resin, an itaconic acid-based polyamidoamine-epichlorohydrin resin and/or an amine polymer-epichlorohydrin resin,
- an epoxy resin such as bisphenol A diglycidyl ether epoxy resin,
- an isocyanate resin and/or isocyanate-based resin,
- an urea-formaldehyde (UF) resin, melamine-formaldehyde resin, melamine-urea-formaldehyde (MUF) resin, phenol-formaldehyde resin, resorcinol-formaldehyde resin, other resins based on formaldehyde or on another aldehyde such as furfural, propanal, butyraldehyde, succinaldehyde, glutaraldehyde, dimethoxyethanal, glyoxylic acid, glycolaldehyde, vanillin,
- a polyurethane-based resin,
- a polyacid-based resin such as based on maleic anhydride or acetic acid,
- an acrylate-based or methacrylate-based resin such as poly(methyl methacrylate), ethylene vinyl acetate (EVA), ethylene-co-vinylacetate-co-acrylic acid, ethylene-co-vinylacetate-co-methacrylic acid, ethylene-co-vinylacetate-co-vinylalcohol, carboxylated vinyl acetate-ethylene copolymers, ethylene vinyl alcohol (EVOH), polyvinylalcohol, polyvinylbutyral-co-vinylalcohol, polyvinylacetate-co-vinylalcohol, or
- a mixture thereof.

13. A process according to anyone of claims 9 to 12, wherein the lignocellulosic material includes straw, paper, cardboard, wood flour (or powder) wood sawdust, wood fibers, wood strands (or flakes), wood particles (or chips) or a mixture thereof

14. A lignocellulosic mat comprising lignocellulosic material impregnated with an adhesive composition according to anyone of claims 1 to 8.

15. A lignocellulosic-based article obtained by the process according to anyone of claims 9 to 13.

Europäisches
Patentamt

European
Patent Office

Office européen
des brevets

# EUROPEAN SEARCH REPORT

**Application Number**

EP 24 30 6870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHI SENLEI ET AL: "Preparation of high water resistance full biomass adhesive by ultrastrong crosslinking with gelatin, citric acid and sucrose", POLYMER, ELSEVIER, AMSTERDAM, NL, vol. 308, 18 July 2024 (2024-07-18), XP087589447, ISSN: 0032-3861, DOI: 10.1016/J.POLYMER.2024.127414 [retrieved on 2024-07-18] * abstract; paragraphs 2.2 and 2.3; scheme 1 * | 1-15 | INV. C09J197/02 C08K5/053 C08K5/092 |
| X | CN 118 440 667 A (UNIV SOUTHWEST FORESTRY) 6 August 2024 (2024-08-06) * claims 1-10 * | 1-15 | |

**TECHNICAL FIELDS SEARCHED (IPC)**

C09J
C08K

The present search report has been drawn up for all claims

| Place of search | Date of completion of the search | Examiner |
|---|---|---|
| Munich | 1 April 2025 | Pellegrini, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## EP 4 741 468 A1

### ANNEX TO THE EUROPEAN SEARCH REPORT
### ON EUROPEAN PATENT APPLICATION NO.

EP 24 30 6870

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | Publication date |
|---|---|---|---|
| CN 118440667 A | 06-08-2024 | NONE | |

For more details about this annex : see Official Journal of the European Patent Office, No. 12/82

EPO FORM P0459

**25**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 3001461 A1
- EP 2236578 A1
- WO 2023089119 A1

### Non-patent literature cited in the description

- Wood-Based Panels - An Introduction for Specialists, COST Office. Brunel University Press, 2010
- Investigation of a new natural adhesive composed of citric acid and sucrose for particleboard. *J Wood Sci*, vol. 59, 203-208
- Investigation of a new natural adhesive composed of citric acid and sucrose for particleboard II: effects of board density and pressing temperature. *J Wood Sci*, vol. 61, 40-44
- **LI et al.** Soy flour adhesive modified with urea, citric acid and boric acid. *Pigment & Resin Technology*, 2010, vol. 39 (4), 223-227